# EUROPÄISCHE PATENTSCHRIFT

(11) **EP 1 820 738 B1**
(45) Veröffentlichungstag und Bekanntmachung des Hinweises auf die Patenterteilung: **12.08.2009**
(21) Anmeldenummer: 07003417.8
(22) Anmeldetag: 19.02.2007
(51) Int. Cl.: B65D 1/24

(54) **Transportkasten, insbesondere Flaschenkasten**
Transport case, in particular bottle case
Caisse de transport, en particulier caisse à bouteilles

(30) Priorität: 20.02.2006 AT 2742006
(43) Veröffentlichungstag der Anmeldung: 22.08.2007
(73) Patentinhaber: Haidlmair Holding GmbH, 4542 Nussbach (AT)
(72) Erfinder: Weiermeier, Gerhard, 4560 Kirchdorf an der Krems (AT)
(74) Vertreter: Ofner, Clemens

(56) Entgegenhaltungen:
- EP-A- 1 484 154
- EP-A- 1 557 253
- DE-A1- 10 239 319

## Beschreibung

Die Erfindung betrifft einen Transportkasten aus Kunststoff-Spritzguss, insbesondere Flaschenkasten gemäß dem Oberbegriff des Anspruchs 6, ein Verfahren zur Herstellung eines Transportkastens aus Kunststoff gemäß dem Oberbegriff des Anspruchs 1 sowie ein Spritzgießwerkzeug zur Herstellung eines Transportkastens aus Kunststoff gemäß dem Oberbegriff des Anspruchs 4.

Transportbehälter, insbesondere Flaschenkästen sind in den letzten Jahren aufgrund der Marktanforderungen insbesondere im Bereich Handhabung sowie optisches Erscheinungsbild weiterentwickelt worden. So sind z.B. die ursprünglich relativ scharfkantigen Griffe zu ergonomisch günstigen und für den Kunden angenehm empfundenen, gerundeten Griffen weiterentwickelt worden, zusätzlich werden die Griffe in neuerer Zeit durch angespritzte Umhüllungen mit grifffreundlichem Material weiter verbessert, wodurch speziell der Tragekomfort deutlich verbessert worden ist. Um auch die steigenden ästhetischen Ansprüche der Kunden zu befriedigen und optische Kaufanreize zu bieten, sind die ursprünglich einfärbigen und einfach bedruckten Transportkästen beispielsweise durch Schaffung von weitgehend glatten Seitenwänden und Verwendung von hochwertig bedruckten, mit dem Behälterkörper innig verbundenen Folienelementen, so genannten Einlegeetiketten oder Labels zu attraktiven Verkaufsverpackungen weiterentwickelt worden.

Aus DE 102 39 319 A1 ist ein Zweikomponenten Kunststoffbehälter, insbesondere Flaschenkasten bekannt, mit einem Boden und Behälterwänden aus einem ersten Kunststoff, bei dem am Boden oder den Behälterwänden ein Bereich aus einem zweiten Kunststoff ausgebildet ist, wobei erster und zweiter Kunststoff stoffschlüssig und/oder formschlüssig starr miteinander verbunden sind, weiters der zweite Kunststoff auf den ersten Kunststoff auf- oder angespritzt ist. Dadurch können die vorteilhaften Eigenschaften von zwei unterschiedlichen Kunststoffen in einem Transportkasten kombiniert werden, z.B. Griffteile mit gummiähnlicher Oberfläche für eine leichtere Handhabung oder farbliche Gestaltungsmöglichkeiten durch Verwendung von zwei unterschiedlich gefärbten Kunststoffen.

Eine Einschränkung der Gestaltungsmöglichkeiten dieses Kunststoffbehälters bzw. des Verfahrens zu seiner Herstellung besteht darin, dass zum Anspritzen des zweiten Kunststoffes ein Halbfabrikat des Behälters oder eines Behälterteils in Bezug auf eine Spritzgussform angeordnet werden muss. Weiters ist als sehr wesentliche Maßnahme zur trennscharfen Abgrenzung der beiden Kunststoffflächen eine Begrenzung des zweiten Kunststoffes durch eine umlaufende Dichtleiste bzw. Dichtnut genannt, um ein Übergreifen der flüssigen Schmelze auf andere Flächenbereiche des Behälters zu vermeiden. Das beschriebene Herstellverfahren bietet, ebenso wie Verfahren anderer Anmelder mit den beschriebenen Maßnahmen nur sehr eingeschränkte Gestaltungsmöglichkeiten für die Verwendung von zwei Kunststoffen an einem Behälter, insbesondere an einem Flaschenkasten, da die Aufbringung im wesentlichen nur im Bereich der Grifföffnungen sowie jeweils auf einzelnen Seitenwänden zufrieden stellend gelöst ist.

EP 1 557 253 A1 : beschreibt ein Verfahren sowie eine Spritzgussform zur Herstellung eines Transportkastens aus Kunststoff mit gepolstertem Handgriff, bei dem der Transportkasten aus einem harten, stabilen Kunststoff und der Handgriff aus einem weichen Kunststoff hergestellt ist. Dabei wird eine Spritzgussform verwendet, die in ihrer die Seitenwand mit dem gepolsterten Handgriffloch formenden Außenwand zwei gegeneinander austauschbar verschiebbare Formteile enthält. In diese Spritzgussform wird zuerst der harte, den Kasten bildende Kunststoff eingespritzt, der bis zu seiner Standfertigkeit erkaltet; anschließend wird der das Handgriffloch bildende Formteil gegen den das Polster im Handgriffloch bildenden Formteil getauscht und in Folge der das Polster bildende Kunststoff über einen zweiten gesonderten Zuführungskanal in die Form eingespritzt. Die beiden austauschbaren Formteile können dazu als gesonderte Teile einzeln nacheinander von zwei unterschiedlichen Warteplätzen in ihre Arbeitsstellung geschoben und dort verriegelt werden, oder gemäß einer weiteren Ausführung auf einer gemeinsamen Formleiste angeordnet sein, die in zwei Stellungen verschoben und in jeder dieser Stellungen verriegelt werden kann.

EP 1 484 154 A1 : offenbart ein dreistufiges Spritzgießverfahren, bei dem innerhalb einer einzigen Spritzgießform in einem ersten Spritzgießvorgang ein tragender Spritzgussteil hergestellt wird, danach in einem zweiten Arbeitsschritt ein weiteres Medium in das Innere des tragenden Spritzgussteils eingespritzt wird, wodurch in diesem ein Hohlraum ausgebildet wird und in einem anschließenden zweiten Spritzgießvorgang ein weiterer Kunststoff an die äußere Oberfläche des tragenden Spritzgussteils angespritzt wird. Zur Schaffung des Hohlraums für den zweiten Spritzgießvorgang wird durch Verschieben von zwei aneinandergrenzenden Formelementen eine von diesen gemeinsam gebildete Aussparung angrenzend an den im ersten Spritzgießvorgang hergestellten tragenden Spritzgussteil positioniert. Auf diese Weise wird der aus einem ersten Kunststoff bestehende tragende Spritzgussteil im zweiten Spritzgießvorgang von dem zweiten kunststoff umhüllt.

Ausgehend von diesem Stand der Technik stellt sich die Aufgabe, einen Transportbehälter, insbesondere einen Flaschenkasten, sowie ein Herstellverfahren und ein Spritzgießwerkzeug zu seiner Herstellung ohne die vorgenannten Nachteile bereitzustellen.

Gelöst wird diese Aufgabe durch die kennzeichnenden Merkmale des Transportkastens und des Spritzgießwerkzeugs gemäß Anspruch 6 bzw. Anspruch 4 sowie die kennzeichnenden Maßnahmen des Verfahrens gemäß Anspruch 1. Der überraschende Vorteil dieser Ausführung des Transportkastens besteht darin, dass durch die Anbringung der zweiten, zusätzlichen Hüllschicht an Eckbereichen und Rändern der Grundschale die Beschränkungen bei der Anordnung und flächenmäßigen Dimensionierung der aus dem zweiten Kunststoff bestehenden Hüllschicht wegfallen, die bei den bisherigen Verfahren der Kombination von zwei Kunststoffen an einem Transportkasten bestanden haben bzw. noch nicht gelöst waren. Durch die Anordnung eines, einen zusätzlichen Formhohlraum schaffenden, verstellbaren Formelements innerhalb des Spritzgießwerkzeuges entfällt ein Umsetzen der Grundschale in ein zweites Spritzgießwerkzeug, womit ein vollständiges Entformen der Grundschale mit einem starken Abkühlen und daraus resultierenden Verbindungsproblemen vermieden ist. Da ein Spritzgießwerkzeug zum Öffnen des Werkzeugs und Entformen des fertigen Werkstücks ohnehin eine Verstellbarkeit der Formteile erfordert, ist der zusätzliche Aufwand für die Verstellbarkeit um die Wandstärke der Hüllschicht gering im Verhältnis zu den dadurch erzielten vorteilhaften Effekten.

Das verstellbare Formelement ist gegenüber anderen Formelementen beweglich gelagert, z.B. durch eine gelenkige Lagerung mit einem Drehgelenk oder eine geradlinig wirkende Führungsanordnung.

Vorteilhaft ist auch eine Ausbildung des Transportkastens gemäß einem weiteren Anspruch, wonach sich die Hüllschicht einstückig über einen Abschnitt einer Seitenwand und eine Oberkante der Grundschale erstreckt. Da die Ausbildung der Oberkante direkten Einfluss auf die Stapelfähigkeit von Transportkästen hat, können durch geeignete Eigenschaften des Kunststoffes der Hüllschicht vorteilhafte Effekte, wie z.B. hohe Abriebfestigkeit oder lärmmindernde Eigenschaften erzielt werden. So kann beispielsweise eine Grundschale aus Polypropylen mit einer Hüllschicht aus Polyethylen, das etwas weicher ist, versehen werden, wodurch gute Gleiteigenschaften und lärmarmes Verhalten die Stapeleigenschaften verbessern können.

Durch eine Ausbildung nach einem weiteren Anspruch mit einer Hüllschicht, die sich einstückig über einen Abschnitt einer Seitenwand und einen Rand einer Grifföffnung in der Grundschale erstreckt, kann auch eine für den Benutzer angenehme Griffausbildung erzielt werden, die eine gute Haptik und angenehme Handhabungseigenschaften aufweist, indem in diesem Bereich z.B. eine Hüllschicht aus einem weicheren oder griffigerem Material als das Material der Grundschale angespritzt wird und dadurch ein so genannter Soft-Griff ausgebildet wird.

Ebenfalls vorteilhaft kann eine Weiterbildung des Transportkastens gemäß einem weiteren Anspruch sein, nach dem die Grundschale einen Teil einer Außenfläche einer oder mehrerer Seitenwände bildet. Da die Außenfläche eines Transportkastens in Gebrauch oft rauer Behandlung, z.B. durch Ziehen über Bodenschwellen ausgesetzt ist, kann durch diese Ausbildung der Transportkasten in den am stärksten beanspruchten Teilen z.B. im Bodenbereich einschalig, mit großer Wanddicke ausgeführt werden, wodurch die Gefahr eines Ablösens der Hüllschicht von der Grundschale durch Überbeanspruchung vermieden ist.

Um die Festigkeit der Verbindung zwischen Grundschale und Hüllschicht zusätzlich zu verbessern, kann die Hüllschicht gemäß einem weitem Anspruch in Ausnehmungen oder Durchdringungen der Grundschale ragen, wodurch für verschiedene Belastungsrichtungen ein Formschluss zwischen Grundschale und Hüllschicht hergestellt werden kann, der ebenfalls die Gefahr eines Ablösens der Hüllschicht reduziert. Die Ausnehmungen und Durchdringungen in der Grundschale werden dazu beim ersten Spritzgießvorgang durch Formelemente, insbesondere Formkerne im Spritzgießwerkzeug hergestellt, die die Wandstärke der Grundschale durch Hineinragen in den ersten Formhohlraum lokal reduzieren und die vor Durchführung des zweiten Spritzgießvorganges z.B. durch Zurückziehen in einen Abstand zur erstarrten Grundschale verbracht werden.

Ebenfalls eine formschlüssige Verankerung der Hüllschicht auf der Grundschale bewirkt eine Ausbildung gemäß einem weiteren Anspruch, indem die Hüllschicht zumindest einen gegenüber dem umgebenden Bereich einer Oberfläche der Grundschale vorstehenden Vorsprung der Grundschale umschließt, flächenbündig einschließt oder vollständig überdeckt. Vorspringende Elemente der Grundschale können durch Ausnehmungen z.B. Sacklöcher in den den Formhohlraum für die Grundschale bildenden Formelementen hergestellt werden. Die im zweiten Spritzgießvorgang aufgebrachte Hüllschicht kann dabei dünner sein, als die Erhebung des Vorsprunges gegenüber der Grundschale, wodurch dieser die Hüllschicht durchdringt und sichtbar ist oder auch flächenbündig mit dem Vorsprung sein und ebenfalls sichtbar sein, oder aber bei größeren Wanddicken der Hüllschicht diesen vollständig verdecken.

Eine vorteilhaft glatte Oberfläche des Transportkastens ist möglich, wenn nach einem weiteren Anspruch ein Rand der Hüllschicht flächenbündig an eine Stufe in der Oberfläche der Grundschale anschließt. Dadurch ist dieser weniger verschmutzungsanfällig, leichter zu reinigen sowie leichter zu handhaben, da vorstehende Ränder der Hüllschicht, die sich beim Manipulieren von Transportkästen gegenseitig verhaken könnten, vermieden sind. Die dazu erforderliche Stufe in der Oberfläche der Grundschale wird durch den ersten Formhohlraum hergestellt, indem ein Formelement gegenüber einem angrenzenden Formelement eine dünnere Wandstärke der Hüllschicht bewirkt und dieses Formelement vor dem zweiten Spritzgießvorgang um die Wandstärke der Hüllschicht von der erstarrten Grundschale distanziert wird.

Gemäß zweier weiterer Ansprüche kann die Hüllschicht auf der Außenseite der Grundschale als auch auf der Innenseite der Grundschale angespritzt sein, was eine entsprechend hohe Gestaltungsfreiheit, als auch optimierte technische Eigenschaften des Transportkastens ermöglicht. Beispielsweise kann durch Anordnung einer weichen, gummiartigen Hüllschicht an der Innenseite eines Flaschenkastens durch eine stoßdämpfende Wirkung eine lärmarme Ausführung eines Flaschenkastens erreicht werden.

Von Vorteil kann auch eine Ausführung sein, bei der sich nach einem weiteren Anspruch die Hüllschicht einstückig über alle Seitenwände des Transportkastens erstreckt. Eine solchermaßen über alle Seiten zusammenhängende Hüllschicht kann wie eine Bandage die mechanische Struktur der Grundschale verstärken wodurch diese mit geringeren Wandstärken hergestellt werden kann, weiters ist bei einem farblichen Unterschied zwischen Grundschale und Hüllschicht unabhängig von der Betrachtungsrichtung eine produktkennzeichnende Zweifarbigkeit möglich.

Bei einer vollständigen Umhüllung der Außenfläche der Grundschale durch die umlaufende Hüllschicht gemäß einem weiteren Anspruch besteht auch die Möglichkeit die Grundschale immer in derselben Farbe herzustellen und allein durch den Wechsel der Farbe der Hüllschicht optisch verschiedene Transportkästen herzustellen.

Vorteilhafte Weiterbildungen gemäß weiterer Ansprüche bestehen darin, an einem Abschnitt der Hüllschicht oder einem Abschnitt der Grundschale ein an der Außenfläche sichtbares Einlegeetikett anzuordnen. Zusätzlich zu den Gestaltungsmöglichkeiten durch die Verwendung zweier Kunststoffe, erreicht man dadurch gestalterische Freiheit, da die Einlegeetiketten, so genannte Labels mit hoher Druckqualität sowie relativ abrieb- und kratzfest vorgefertigt werden können und durch den Wechsel zwischen verschiedenartigen Einlegeetiketten das Erscheinungsbild der Transportkästen auf einfache Weise stark verändert werden kann.

Nach weiteren Ansprüchen kann durch die geeignete Kombination zweier unterschiedlicher Kunststoffe, insbesondere mit unterschiedlichen mechanischen Eigenschaften und unterschiedlichen Farben, jeweils eine für den anzustrebenden Zweck des Transportkastens eine vorteilhafte Materialkombination ausgewählt werden. Wie bei sonstigen Verfahren des ZweiKomponenten-Spritzgießens ist dabei die Haftung zwischen Grundschale und Hüllschicht von großer Bedeutung. In diesem Zusammenhang sei auf dem Fachmann bekannte Kompatibilitätstabellen verwiesen.

Das Verfahren zur Herstellung eines Transportkastens ist erfindungsgemäß dadurch gekennzeichnet, dass der zusätzliche Formhohlraum im Wesentlichen von der Grundschale und dem oder den verstellbaren Formelementen begrenzt ist. Das oder die verstellbaren Formelemente formen dabei einen Eckbereich zwischen zwei Seitenwänden der Grundschale und nach Verstellung den daran angespritzten Eckbereich der Hüllschicht. Die Umhüllung eines Randes einer Seitenwand kann auf die gleiche Weise erfolgen, da der Rand aufgrund der Wandstärke der Grundschale auch als Eckbereich betrachtet werden kann.

Durch den Einsatz eines oder mehrerer verstellbarer Zusatzformelemente gemäß einem weiteren Anspruch kann ein zusätzlicher Formhohlraum für den zweiten Spritzgießvorgang geschaffen werden, der sich über alle Seitenwände erstreckt. Da der zusätzliche, zweite Formhohlraum in diesem Fall gewissermaßen einen größeren Umfang aufweisen muss, als der erste Formhohlraum, muss der durch das allseitige Verstellen der Formelemente entstehende Zwischenraum mit einem Zusatzformelement verschlossen werden. Durch die Verwendung eines Zusatzformelements kann ebenfalls die äußere Form der Hüllschicht gegenüber der Form der darunter liegenden Grundschale variiert werden. Zusatzformelemente können die Eckbereiche der Hüllschicht zwischen aneinandergrenzenden Seitenwänden formen, jedoch auch im Inneren der Seitenwände eingesetzt werden, wenn die Teilungsebene zwischen Formelementen z.B. in der Mitte einer Seitenwand liegt.

Das Verfahren kann gemäß weiteren Ansprüchen vorteilhaft auch um Verfahrensschritte zum Platzieren eines oder mehrerer, an der Außenfläche des fertigen Transportkastens sichtbarer Einlegeetiketten in der Spritzgießform erweitert werden, wodurch, wie bereits zuvor erwähnt, zusätzliche Gestaltungsmöglichkeiten erzielt werden. Das Einlegeetikett kann dabei, je nach dem Zeitpunkt und der Position des Einlegens in die Form, an der Grundschale oder der Hüllschicht angeordnet sein.

Das Spritzgießwerkzeug ist erfindungsgemäß so ausgebildet, das der zusätzliche Formhohlraum von der Grundschale, von dem oder den verstellbaren Formelementen und zumindest einem verstellbaren Zusatzformelement begrenzt ist. Durch die Verwendung eines Zusatzformelements kann die äußere Form der Hüllschicht abweichend von der Form der darunter liegenden Grundschale geformt werden, insbesondere kann durch eine Vergrößerung des Umfanges des Formhohlraums eine sich über alle Seitenwände erstreckende Hüllschicht angespritzt werden. Das Zusatzformelement wird dazu in einen durch das Verstellen der Formelemente entstehenden Zwischenraum eingebracht, wodurch dieses den entstandenen, zusätzlichen Formhohlraum zum Spritzgießen der Hüllschicht verschließt.

Durch die Ausbildung des Spritzgießwerkzeuges mit einem als Formbacken bzw. als Formkern ausgeführten verstellbaren Formelement, kann die Hüllschicht entweder an die Außenfläche der Grundschale oder an die Innenfläche des Transportkastens oder auch sowohl innen als auch außen angespritzt werden.

Wenn der zusätzliche Formhohlraum an der Innenseite der Grundschale geschaffen werden soll, ist es vorteilhaft, den dazu erforderlichen Formkern als so genannten Faltkern auszubilden, bei dem der Querschnitt zwischen den beiden Spritzgießvorgängen reduziert werden kann.

Die Ausbildung des Spritzgießwerkzeuges nach einem weiteren Anspruch, mit an einem Eckbereich zwischen aneinandergrenzenden Seitenwänden angeordnetem Zusatzformelement ist vorteilhaft, wenn die Formteile für die Seitenwandflächen möglichst ungeteilt bleiben sollten, z.B. wenn ein Einlegeetikett in die Mitte der Seitenwände positioniert werden sollte.

Die Ausbildung des Spritzgießwerkzeuges nach einem weiteren Anspruch, mit innerhalb einer Seitenwandfläche angeordnetem Zusatzformelement, kann vorteilhaft eingesetzt werden, wenn z.B. ein Einlegeetikett im Eckbereich eines Transportkastens positioniert werden sollte.

Die Erfindung wird im nachfolgenden anhand der in den Zeichnungen dargestellten Ausführungsbeispiele näher erläutert.

Es zeigen:
- Fig. 1: einen erfindungsgemäßen Transportkasten in vereinfachter, schematischer Darstellung;
- Fig. 2: einen Schnitt durch einen Transportkasten gemäß Fig. 1 in vereinfachter, schematischer Darstellung;
- Fig. 3: einen Schnitt durch einen Transportkasten gemäß Linie III-III in Fig. 2 in vereinfachter, schematischer Darstellung;
- Fig. 4: einen Schnitt durch einen Transportkasten mit anderer Eckausbildung gemäß Linie III-III in Fig. 2 in vereinfachter, schematischer Darstellung;
- Fig. 5: einen Schnitt durch einen Transportkasten mit einer weiteren Eckausbildung gemäß Linie III-III in Fig. 2 in vereinfachter, schematischer Darstellung;
- Fig. 6: einen Teil eines Querschnitts durch eine nicht beanspruchte Variante eines Spritzgießwerkzeugs gemäß Linie III-III in Fig. 2 in vereinfachter, schematischer Darstellung;
- Fig. 7: einen Querschnitt durch eine weitere Ausführungsform des Spritzgießwerkzeuges gemäß Linie III-III in Fig. 2 in vereinfachter, schematischer Darstellung;
- Fig. 8: einen Schnitt parallel zur Hochachse des Transportkastens durch eine nicht beanspruchte Variante des Spritzgießwerkzeuges in vereinfachter, schematischer Darstellung;
- Fig. 9: einen Schnitt parallel zur Hochachse des Transportkastens durch eine weitere Ausführungsform des Spritzgießwerkzeuges in vereinfachter, schematischer Darstellung;
- Fig. 10: einen Schnitt quer zur Hochachse des Transportkastens durch die Ausführungsform des Spritzgießwerkzeuges gemäß Fig. 9 in vereinfachter, schematischer Darstellung;
- Fig. 11: einen Querschnitt durch einen Teil einer Seitenwand mit zwei möglichen Ausbildungen eines Formschlusses zwischen Grundschale und Hüllschicht;
- Fig. 12: einen Querschnitt durch einen Teil einer Seitenwand mit drei weiteren, möglichen Ausbildungen eines Formschlusses zwischen Grundschale und Hüllschicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

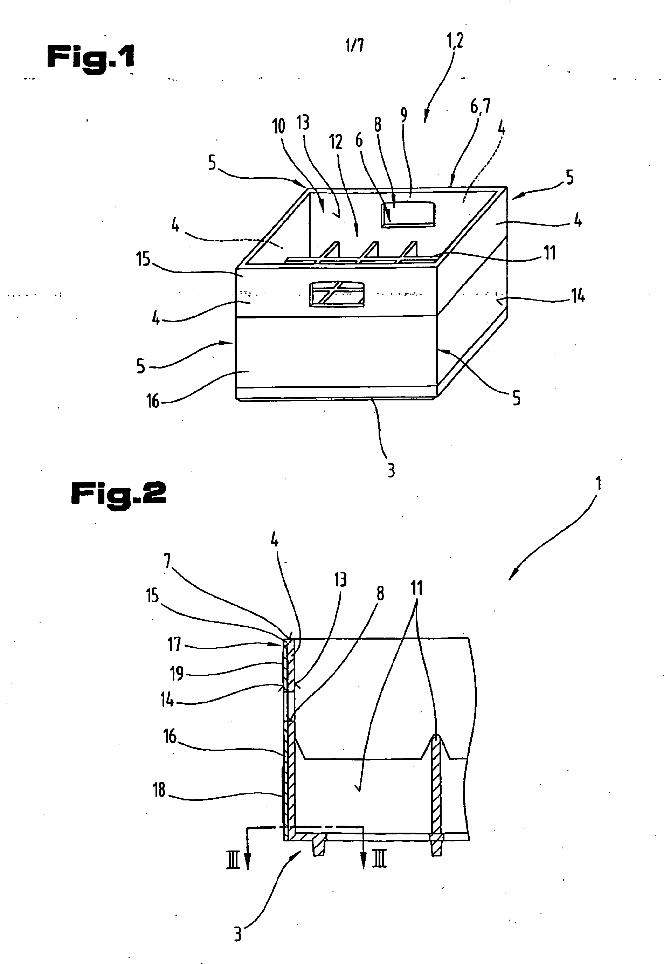

Fig. 1 zeigt eine quaderförmigen Transportkasten 1 aus Kunststoff-Spritzguss, der im Ausführungsbeispiel als Flaschenkasten 2 ausgeführt ist. Dieser umfasst einen Boden 3 und vier Seitenwände 4. Der Boden 3 ist gegenüber den Seitenwänden 4 zurückgesetzt, um für das Stapeln der Transportkästen 1 eine einfache Positionierung durch Formschluss zu erreichen.

Zwei Seitenwände 4 grenzen dabei jeweils in einem Eckbereich 5 aneinander, der scharfkantig, als auch gerundet ausgeführt sein kann.

Die Seitenwände 4 besitzen einen Rand 6, der eine umlaufende Oberkante 7 bildet. Diese dient beim Stapeln als Auflagefläche für einen darüber liegenden Transportkasten 1. Einen weiteren Rand 6 besitzen die Seitenwände 4 im Bereich von Grifföffnungen 8. Jeweils zwischen einer Grifföffnung 8 und dem oberen Rand 6 erstreckt sich dadurch ein Griff 9 zur Handhabung des Transportkastens 1. Bei den meisten Transportkästen 1, insbesondere Flaschenkästen 2 sind an allen Seitenwänden 4 Griffe 9 ausgebildet, im Ausführungsbeispiel sind zur Vereinfachung nur zwei Griffe 9 dargestellt.

Der Boden 3 und die vier Seitenwände 4 umgrenzen einen Innenraum 10 des Transportkastens 1, der durch Trennwände 11 in mehrere Aufnahmefächer 12 zur Aufnahme des Transportgutes, insbesondere Flaschen unterteilt ist. Der Transportkasten 1 besitzt eine dem Innenraum 10 zugewandte Innenfläche 13, gebildet durch die Innenseiten der Seitenwände 4 und eine Außenfläche 14, gebildet durch die Außenseiten der Seitenwände 4.

Die Seitenwände 4 umfassen erfindungsgemäß eine Grundschale 15, die in einem ersten Spritzgießvorgang hergestellt ist, und eine daran angespritzte Hüllschicht 16 die in einem nachfolgenden Spritzgießvorgang an die erstarrte Grundschale 15 angespritzt ist. Die bereits erstarrte Oberfläche der Grundschale 15 wird beim Einspritzen des flüssigen Kunststoffes für die Hüllschicht 16 geringfügig angeschmolzen, wodurch die beiden aneinandergrenzenden Materialschichten fest verbunden sind. Die Grundschale 15 bildet einen Grundaufbau in Form des Bodens 3 und der Seitenwände 4, der durch ausreichende Dimensionierung die Robustheit des Transportkastens 1 begründet.

Der Kunststoff der Hüllschicht 16 kann gleich wie der Kunststoff der Grundschale 15 gewählt werden, vorteilhafte Effekte werden jedoch erzielt, wenn sich der Kunststoff der Hüllschicht 16 von dem der Grundschale 15 unterscheidet. Dies kann z.B. in einem Unterschied in der Farbe bestehen, wodurch hauptsächlich optische, gestalterische Effekte erzielt werden, daneben aber auch in unterschiedlichen mechanischen Eigenschaften, wie insbesondere Härte und mechanische Festigkeit oder Zähigkeit des Kunststoffmaterials. Beispielsweise kann die Grundschale 15 aus Polypropylen und die Hüllschicht aus Polyethylen gebildet sein.

Die Hüllschicht 16 erstreckt sich erfindungsgemäß einstückig über einen Abschnitt einer Seitenwand 4 sowie einen Eckbereich 5, im dargestellten Ausführungsbeispiel gemäß Fig. 1 über alle vier Seitenwände 4. Durch diese großflächige Ausführung der Hüllschicht 16 wird die Festigkeit des Transportkastens 1 zusätzlich erhöht, da die wirksame Wandstärke in großen Bereichen vergrößert wird. Die Hüllschicht 16 kann auch die gesamte Außenfläche 14 des Transportkastens 1 bilden, wodurch die Grundschale 15 außen vollständig überdeckt ist.

Neben der Erhöhung der mechanischen Festigkeit kann durch eine Hüllschicht 16 in von der Grundschale 15 abweichender Farbe der optische Gesamteindruck des Transportkastens 1 in weiten Bereichen beeinflusst werden und dadurch auch Kaufanreize geschaffen werden.

Fig. 2 zeigt einen Querschnitt durch einen Transportkastens 1 gemäß Fig. 1, umfassend einen Boden 3, Seitenwände 4 sowie Trennwände 11. Man erkennt die an die Grundschale 15 angespritzte Hüllschicht 16, die dadurch flächig miteinander verbunden sind. An einer Stoßstelle 17 grenzt die Hüllschicht 16 flächenbündig an einen Absatz bzw. eine Stufe in der Grundschale 15, wodurch die Außenfläche 14 auch an der Stoßstelle 17 glatt und eben ist.

Im Bereich der Hüllschicht 16 ist an der Außenfläche 14 ein Einlegeetikett 18 angeordnet, das vor dem zweiten Spritzgießvorgang in das teilweise geöffnete Spritzgießwerkzeug eingelegt wird und mit dem Material der Hüllschicht 16 hinterspritzt wird. Ein weiteres Einlegeetikett 19 ist beispielsweise im Bereich der Grundschale 15 angeordnet, wobei dieses schon vor dem ersten Spritzgießvorgang in den Formhohlraum für die Grundschale 15 eingelegt wird. Einlegeetiketten 18, 19 bestehen meist aus einem hochwertig bedruckten Kunststofffolienzuschnitt, der häufig mittels Robotern in die zumindest teilweise geöffnete Spritzgießform eingelegt wird und mittels elektrostatischer Anziehung in der Form fixiert wird. Die Größe der Einlegeetiketten kann dabei in weiten Bereichen variiert werden, weiters sind sie aufgrund der einfacheren Fixierung in einem vertieften Abschnitt der Form häufig auf erhabenen Bereichen der Außenfläche 14 angebracht.

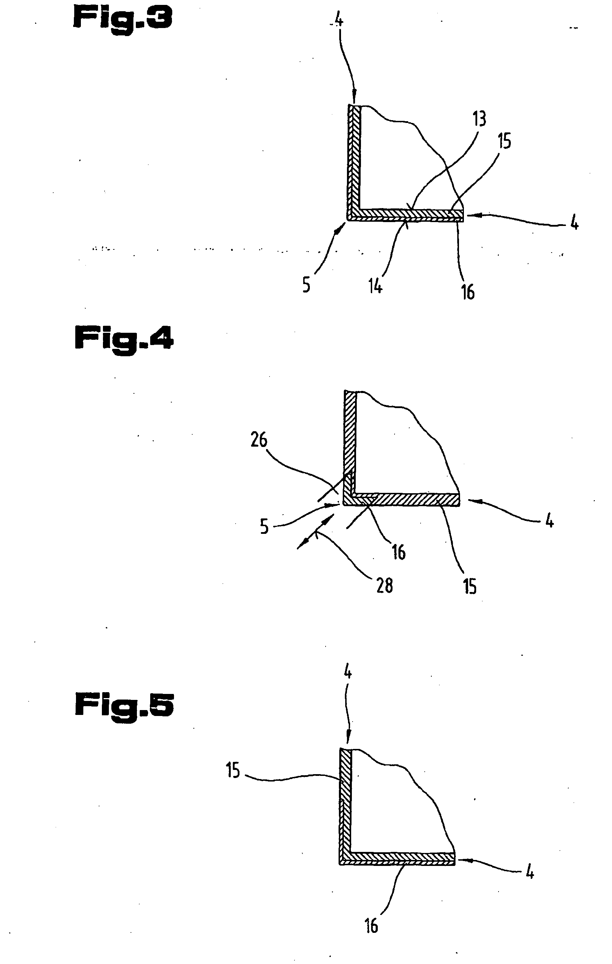

Fig. 3 zeigt einen Ausschnitt aus einem Schnitt durch einen Transportkasten 1 gemäß der Linie III-III in Fig. 2. Man erkennt zwei in einem Eckbereich 5 aneinandergrenzende Seitenwände 4 des Transportkastens 1. Die Innenfläche 13 des Transportkastens 1 ist von der Grundschale 15, die Außenfläche 14 von der Hüllschicht 16 gebildet. Im dargestellten Beispiel ist der Eckbereich 5 auch weitgehend scharfkantig ausgeführt, er kann jedoch auch mit großem Radius abgerundet ausgeführt sein.

Fig. 4 zeigt einen Schnitt durch eine andere Ausführung des Eckbereichs 5, bei dem sich die Hüllschicht 16 im Wesentlichen nur auf den Eckbereich 5 und nur einen kleinen Abschnitt der Seitenwände 4 erstreckt. In diesem Fall sind die Seitenwände 4 zum Großteil von der Grundschale 15 allein gebildet.

Eine weitere, mögliche Ausbildung eines Eckbereichs 5 ist in Fig. 5 dargestellt, bei der sich die Hüllschicht 16 über einen großen Teil oder die gesamte Fläche einer Seitenwand 4 erstreckt, von der daran angrenzenden Seitenwand 4 jedoch nur einen kurzen Abschnitt überdeckt.

Die Umhüllung eines Randes 6 einer Seitenwand 4 kann auf die gleiche Weise erfolgen, da der Rand 6 aufgrund der Wandstärke der Grundschale 15 ähnlich wie ein Eckbereich 5 behandelt werden kann.

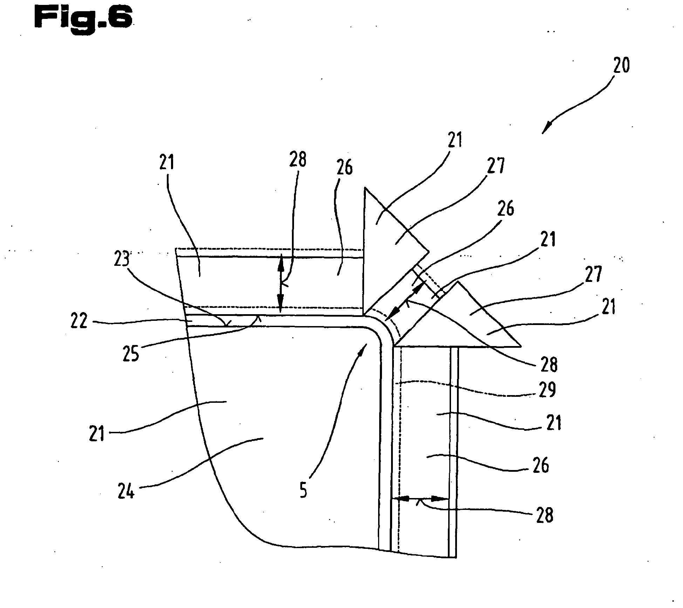

Fig. 6 zeigt den schematischen Aufbau einer nicht beanspruchten Variante eines Spritzgießwerkzeuges 20 zur Herstellung eines in dieser Figur nicht dargestellten Transportkastens 1 mit einer Grundschale 15 und einer daran angespritzten Hüllschicht 16. Dieses umfasst mehrere Formelemente 21 die in der mit durchgezogenen Linien dargestellten Lage einen Formhohlraum 22 begrenzen, in den durch Einspritzen von flüssigem Kunststoff die Grundschale 15 hergestellt wird. Eine, die Innenfläche 13 des Transportkastens 1 bildende innere Formwand 23 wird dabei von einem Formkern 24 gebildet, dessen Form der späteren Form des Innenraums 10 des Transportkastens 1 entspricht. Eine äußere Formwand 25 wird durch verstellbare Formelemente 26 sowie feststehende Formelemente 27 gebildet, die in der ersten, mit durchgezogenen Linien dargestellten Stellung die Außenseite der Grundschale 15 formen. Sie können daher auch als Formbacken, die mit dem Formkern 24 zusammenwirken betrachtet werden. Die feststehenden Formelemente 27 sind dabei jeweils im Eckbereich 5 angeordnet und haben im Querschnitt die Form von Keilen, wobei die verstellbaren Formelemente 26 entlang der Keilflächen jeweils in Richtung der Doppelpfeile 28 verstellbar sind. Nach dem Spritzen der Grundschale 15 im Formhohlraum 22 werden die verstellbaren Formelemente 26 in eine mit strichlierten Linien dargestellten Lage in einen Abstand zur erstarrten Grundschale 15 gebracht, wodurch ein Formhohlraum 29 entsteht der durch die verstellten Formelemente 26, die feststehenden Formelemente 27 und die Außenseite der Grundschale 15 begrenzt ist und die Form und Wanddicke der Hüllschicht 15 bestimmt. Die Verstellung der Formelemente 26 erfolgt mit Hilfe von nicht dargestellten Verstellanordnungen, umfassend Führungsanordnungen zum Führen der Formelemente 26 während der Verstellbewegung sowie Antriebseinrichtungen zur Einleitung der erforderlichen Stellkräfte. Diese können z.B. die in gattungsgemäßen Spritzgießformen üblichen Keilelemente zur Verstellung der Formelemente sowie zusätzliche Aktoren, z.B. Pneumatikzylinder oder Hydraulikzylinder umfassen.

Abweichend von der vorbeschriebenen Variante, ist es auch möglich, dass nur ein Teil der verstellbaren Formelemente 26 zwischen erstem und nachfolgendem Spritzgießvorgang verstellt werden, d.h. die Hüllschicht 15durch entsprechende Ansteuerung der verschiebbaren Formelemente 26 nur an den gewünschten Positionen auf die Grundschale 15 aufgebracht wird, z.B. nur das den Eckbereich 5 formende Formelement 26 verstellt wird und die die Seitenwände 4 formenden Formelemente in der Ausgangsstellung verbleiben.

Der Formkern 24 ist in der in Fig. 6 dargestellten Ausführung ebenfalls feststehend ausgebildet, es ist jedoch durchaus möglich, dass dieser auch verstellbare Formelemente enthält, wodurch eine Hüllschicht 16 auch zumindest abschnittsweise an der Innenseite der Grundschale 15 angespritzt werden kann.

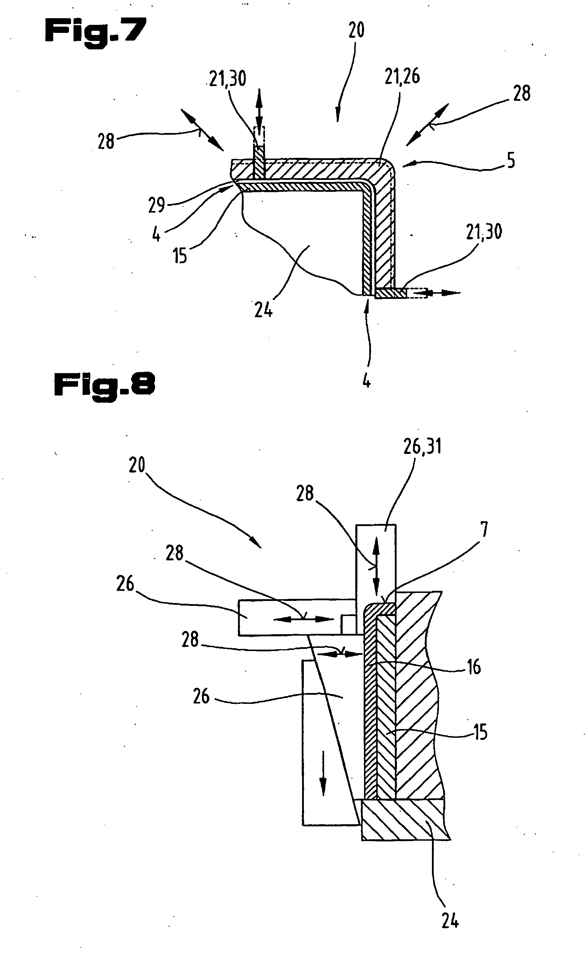

Fig. 7 zeigt eine erfindungsgemäße Ausführungsmöglichkeit des Verfahrens bzw. einen erfindungsgemäßen schematischen Aufbau des Spritzgießwerkzeuges 20 mit bereits gespritzter und erstarrter Grundschale 15, bei dem die Teilungsebenen zwischen den Formelementen 21 nicht in den Eckbereichen 5 sondern mitten in den Seitenwänden 4 angeordnet sind. Dabei wird der die Form, Position und Größe der Hüllschicht 16 bestimmende zusätzliche Formhohlraum 29 von der erstarrten, am Formkern 24 verbleibenden Grundschale 15, den verstellbaren Formelementen 26 in der verstellten, äußeren Position sowie Zusatzformelementen 30 begrenzt, die einen zwischen den verstellbaren Formelementen 26 beim Verstellen in Richtung der Doppelpfeile 28 entstehenden Zwischenraum verschließen. Die Teilungsebenen kommen dadurch inmitten der Seitenflächen 4 zu liegen.

Durch die Zusatzformelemente 30 kann der Gesamtumfang der äußeren Formwand 25 vergrößert werden, wodurch die Hüllschicht 16 einstückig um alle Seitenwände 4 angespritzt werden kann. Bei der Ausführung des Spritzgießwerkzeuges 20 gemäß Fig. 6 haben die feststehenden Formelemente 27 die Funktion der Zusatzformelemente 30 gemäß Fig. 7, müssen jedoch aufgrund ihrer Anordnung und Ausbildung zwischen erstem und zweiten Spritzgießvorgang nicht verstellt werden.

Fig. 8 zeigt eine mögliche nicht beanspruchte Ausbildung des Transportkastens 1 bzw. des Spritzgießwerkzeugs 20 im Bereich einer Oberkante 7 einer Seitenwand 4 in vereinfachter, schematischer Darstellung mit fertiggespritzter Grundschale 15 und Hüllschicht 16.

Im Bereich der Oberkante 7 wird die Grundschale 15 bei dieser Ausführung von einem verstellbaren Formelement 26 geformt, das einfach scharfkantig ausgeführt ist, die Hüllschicht 16 wird hingegen von einem Wechselformelement 31 geformt, das bei der Durchführung des zweiten, nachfolgenden Spritzgießvorganges das verstellbare Formelement 26 ersetzt. Das Wechselformelement 31 besitzt in diesem Beispiel eine abgerundete Formwand wodurch die Oberkante 7 des Transportkastens 1 gerundet ausgebildet wird. Die Verstellung des Formelements 26 bzw. des Wechselformelements 31 erfolgt jeweils in Richtung der zugehörigen Doppelpfeile 28.

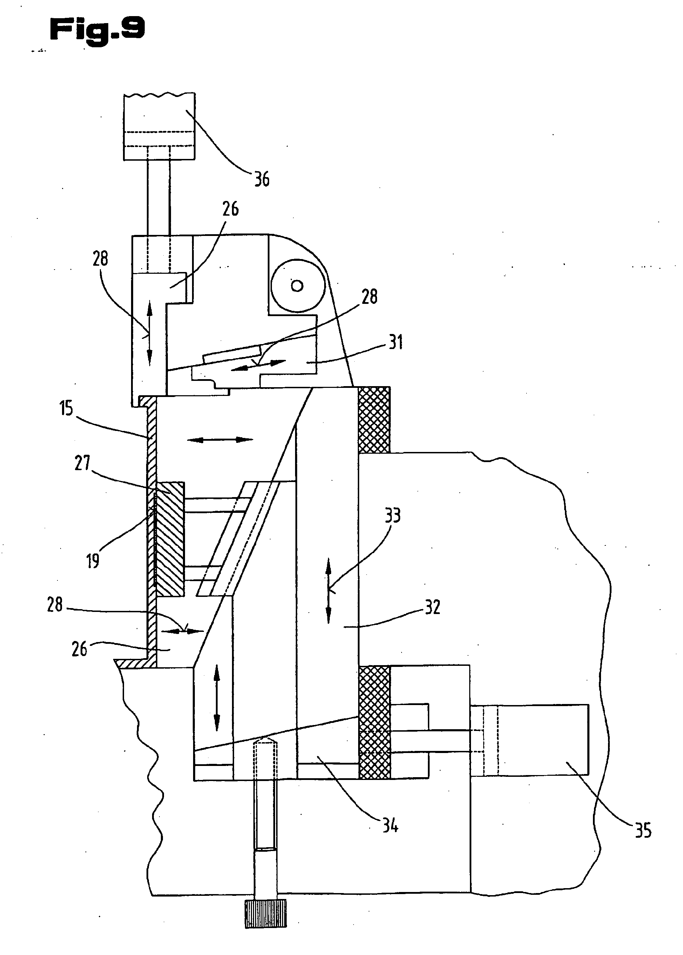

Fig. 9 zeigt eine weitere mögliche Ausführung des Spritzgießwerkzeugs 20 in Schnittdarstellung, mit gespritzter und erstarrter Grundschale 15 jedoch ohne Formkern 24, der den Innenraum 10 des Transportkastens 1 formt. Die Formelemente 21 zur Formung der Seitenwände 4 sowie der Oberkante 7 umfassen in dieser Ausführung wieder mehrere verstellbare Formelemente 26, zur Begrenzung des Formhohlraums 22 für die Grundschale 15 in einer ersten, dargestellten Stellung sowie zur Schaffung eines zusätzlichen Formhohlraums 29 für die Hüllschicht 16 in einer zweiten, nicht dargestellten Stellung sowie ein feststehendes Formelement 27 in der Mitte einer Seitenwand 4.

Dieses feststehende Formelement 27 formt somit einen Abschnitt in der Grundschale 15, der eine sichtbare Außenfläche 14 des Transportkastens 1 bildet. Zusätzlich wird dieses feststehende Formelement 27 dazu genutzt, vor dem Spritzen der Grundschale 15 ein Einlegeetikett 19 aufzunehmen, das im ersten Spritzgießvorgang hinterspritzt und damit als von außen sichtbares Element fixiert wird. Das Einlegen des Einlegeetiketts 19 in das geöffnete Spritzgießwerkzeug 20 kann beispielsweise automatisiert durch einen Roboter erfolgen, der gegebenenfalls auch das Entnehmen des fertigen Transportkastens 1 aus der Spritzgießmaschine ausführt.

Das die in Fig. 9 senkrechte Seitenwand 4 formende verstellbare, großflächige Formelement 26 wird zwischen den beiden Spritzgießvorgängen in Richtung des zugeordneten Doppelpfeils 28 über ein Keilelement 32, das in Richtung des zugeordneten Doppelpfeiles 33 verstellbar ist, bewegt, wobei die großen Keilflächen eine stabile Abstützung des verstellbaren Formelements 26 während der Spritzgießvorgänge sicherstellen. Der Verstellweg des Keilelements 32 wird durch einen Verstellkeil 34 bestimmt, der mittels eines Verstellantriebs 35 in vorbestimmte Positionen verbracht wird. Durch diese doppelte Keilübersetzung kann der Verstellweg des Formelements 26 und damit die Dicke der Hüllschicht 16 stufenlos und mit hoher Genauigkeit justiert werden.

Zur Schaffung des ersten Formhohlraumes 22 für die Grundschale 15 im Bereich der Oberkante 7 ist ein, mittels eines weiteren Verstellantriebes 36 in Richtung des senkrechten Doppelpfeils 28 verstellbares, Formelement 26 vorgesehen, das nach Spritzen und Erstarren der Grundschale 15 von dieser distanziert wird. Zum Verschließen des zusätzlichen Formhohlraums 29 für den zweiten Spritzgießvorgang wird anstelle des verstellbaren Formelements 26 ein Wechselformelement 31 über eine weitere, nicht dargestellte Verstellanordnung in Position gebracht, das Prinzip entspricht dabei, bis auf eine schräge Verstellrichtung 28 des Wechselformelements 31 der Ausführung gemäß Figur 8.

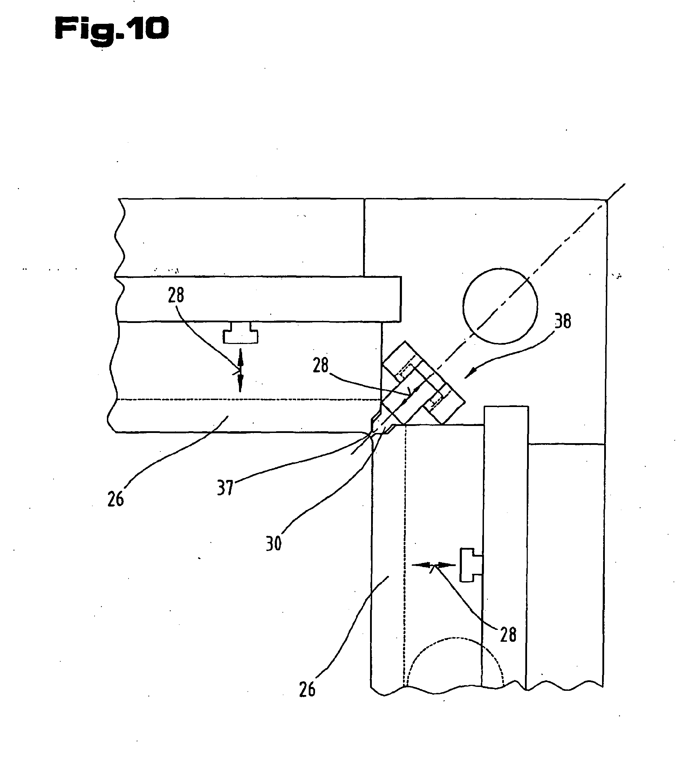

Fig. 10 zeigt einen Schnitt quer zur Hochachse durch ein erfindungsgemäßes Spritzgießwerkzeug 20, in dem die Ausbildung eines am Transportkasten 1 senkrecht ausgerichteten Eckbereichs 5 erkennbar ist. In diesem Beispiel werden die Seitenwände 4 wieder durch großflächige, verstellbare Formelemente 26 begrenzt, die in Richtung der zugeordneten Doppelpfeile 28 verstellbar sind. Den beim zwischen den Formelementen 26 beim Verstellen für den zweiten Spritzgießvorgang entstehenden, spaltförmigen Zwischenraum verschließt in dieser Ausführung ein verstellbares Zusatzformelement 30 in Form einer Dichtleiste 37. Diese wird mittels einer Kulissenführung 38 in die jeweiligen Stellungen verbracht.

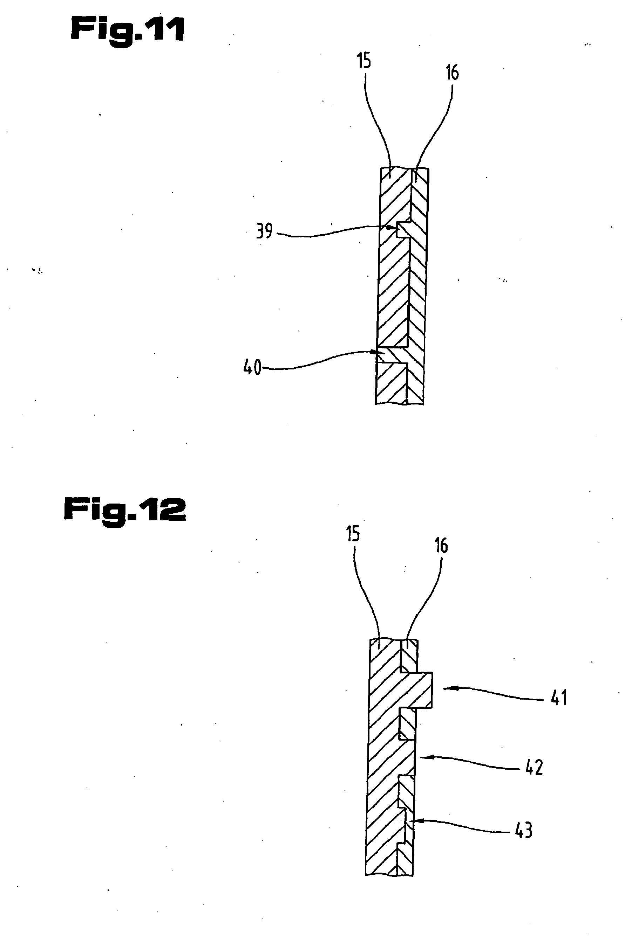

Fig. 11 zeigt einen Querschnitt durch einen aus einer Grundschale 15 und einer daran angespritzten Hüllschicht 16 aufgebauten Abschnitt des Transportkastens 1. Dabei wird neben der durch das Anspritzen entstehenden Verbindung zusätzlich ein Formschluss zwischen Grundschale 15 und Hüllschicht 16 realisiert, der die Belastbarkeit des Transportkastens 1 weiter erhöht. Dazu weist die Grundschale 15 beispielsweise eine Ausnehmung 39 oder eine Durchdringung 40 auf, die beim ersten Spritzgießvorgang hergestellt wird und die nach Verstellung von Formelementen 26 Teil des zusätzlichen Formhohlraums 29 werden. Nach dem zweiten Spritzgießvorgang ragt dadurch die eingespritzte und erstarrte Hüllschicht 16 formschlüssig in die Ausnehmung 39 bzw. die Durchdringung 40.

Fig. 12 zeigt in einem Ausschnitt einer Seitenwand 4 eine weitere, ähnliche Möglichkeit einen Formschluss zwischen Grundschale 15 und Hüllschicht 16 zu erzielen. Dazu werden im ersten Spritzgießvorgang Vorsprünge 41, 42 oder 43 in der Grundschale 15 hergestellt, die beim zweiten Spritzgießvorgang von der Hüllschicht teilweise umschlossen, flächenbündig eingeschlossen bzw. vollständig verdeckt werden. Vorsprünge 41, 42, die nach dem zweiten Spritzgießvorgang sichtbar bleiben können somit neben der Erhöhung der Festigkeit auch als optisches Gestaltungselement eingesetzt werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Transportkastens 1 bzw. des Spritzgießwerkzeuges 20, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mitumfasst.

Der Ordnung halber sei abschließend darauf hingewiesen, dass zum besseren Verständnis des Aufbaus des Transportkastens 1 bzw. des Spritzgießwerkzeugs 20 deren Bestandteile teilweise unmaßstäblich und/oder vergrößert und/oder verkleinert dargestellt wurden.

### Bezugszeichenaufstellung

- 1: Transportkasten
- 2: Flaschenkasten
- 3: Boden
- 4: Seitenwand
- 5: Eckbereich

- 6: Rand
- 7: Oberkante
- 8: Grifföffnung
- 9: Griff
- 10: Innenraum

- 11: Trennwand
- 12: Aufnahmefach
- 13: Innenfläche
- 14: Außenfläche
- 15: Grundschale

- 16: Hüllschicht
- 17: Stoßstelle
- 18: Einlageetikett
- 19: Einlageetikett
- 20: Spritzgießwerkzeug

- 21: Formelement
- 22: Formhohlraum
- 23: Formwand
- 24: Formkern
- 25: Formwand

- 26: Formelement
- 27: Formelement
- 28: Doppelpfeil
- 29: Formhohlraum
- 30: Zusatzformelement

- 31: Wechselformelement
- 32: Keilelement
- 33: Doppelpfeil
- 34: Verstellkeil
- 35: Verstellantrieb

- 36: Verstellantrieb
- 37: Dichtleiste
- 38: Kulissenführung
- 39: Ausnehmung
- 40: Durchdringung

- 41: Vorsprung
- 42: Vorsprung
- 43: Vorsprung

## Patentansprüche

1. Verfahren zur Herstellung eines Transportkastens (1) aus Kunststoff, bei dem in einem ersten Spritzgießvorgang ein flüssiger erster Kunststoff in einen ersten Formhohlraum (22), der von einem, zumindest zwei Formelemente (21, 26) umfassenden, Spritzgießwerkzeug (20) begrenzt ist, gespritzt wird, der erstarrte Kunststoff eine Boden (3) und Seitenwände (4) des Transportkastens (1) aufbauende Grundschale (15) bildet, anschließend durch Verstellen von zumindest einem verstellbaren Formelement (26) und einem verstellbaren Zusatzformelement (30) im selben Spritzgießwerkzeug (20) ein von der Grundschale (15) und dem verstellbaren Formelement (26) in der verstellten Position sowie dem verstellbaren Zusatzformelement (30) in der verstellten Position begrenzter, zusätzlicher, zweiter Formhohlraum (29) gebildet wird, in einem zweiten Spritzgießvorgang in den zusätzlichen Formhohlraum (29) ein flüssiger zweiter Kunststoff gespritzt wird, der nach Erstarrung eine an die Grundschale (15) angespritzte Hüllschicht (16) bildet und anschließend der Transportkasten (1) aus dem Spritzgießwerkzeug (20) entformt wird, **dadurch gekennzeichnet, dass** an einem Eckbereich (5) zwischen aneinandergrenzenden Seitenwänden (4) der zusätzliche Formhohlraum (29) für die Hüllschicht (16) durch ein zu der jeweiligen Seitenwand (4) der erstarrten Grundschale (15) im Wesentlichen rechtwinkeliges Verstellen der verstellbaren Formelemente (26, 26) an zwei benachbarten Seitenwänden (4, 4) und ein Verschließen eines durch das Verstellen zwischen den verstellbaren Formelementen (26, 26) entstehenden Zwischenraums mittels des verstellbaren Zusatzformelements (30) gebildet wird.

2. Verfahren nach Anspruch 1, **dadurch gekennzeichnet, dass** zwischen dem ersten Spritzgießvorgang und dem zweiten Spritzgießvorgang ein Einlegeetikett (18) in das teilweise geöffnete Spritzgießwerkzeug (20) eingelegt wird.

3. Verfahren nach nach Anspruch 1 oder 2, **dadurch gekennzeichnet, dass** vor dem Schließen des Spritzgießwerkzeugs (20) für den ersten Spritzgießvorgang ein Einlegeetikett (18) in einen Abschnitt eines Formelements (21) eingelegt wird, das sich beim ersten und zweiten Spritzgießvorgang in derselben Position befindet und somit eine Außenfläche (14) des Transportkastens (1) bildet.

4. Spritzgießwerkzeug (20) zur Herstellung eines Transportkastens (1) aus Kunststoff umfassend zumindest zwei relativ zueinander verstellbare Formelemente (21), die in einer Vorspritzstellung einen Formhohlraum (22) für das Spritzgießen einer Boden (3) und Seitenwände (4) des Transportkastens (1) aufbauenden Grundschale (15) begrenzen, wobei zumindest ein Formelement (26) und ein Zusatzformelement (30) zur Schaffung eines zusätzlichen Formhohlraums (29) für das Anspritzen einer mit der Grundschale (15) verbundenen Hüllschicht (16) gegenüber der Vorspritzstellung verstellbar gelagert sind, **dadurch gekennzeichnet, dass** zur Schaffung des zusätzlichen Formhohlraums (29) an einem Eckbereich (5) zwischen benachbarten Seitenwänden (4) Formelemente (26, 26) zu der jeweiligen Seitenwand (4) der erstarrten Grundschale (15) im Wesentlichen in rechtwinkeliger Richtung verstellbar sind und in einen durch diese Verstellbewegung entstehenden Zwischenraum zwischen den Formelementen (26, 26) zumindest ein am zweiten Spritzgießvorgang beteiligtes Zusatzformelement (30) verstellbar ist.

5. Spritzgießwerkzeug (20) nach Anspruch 4, **dadurch gekennzeichnet, dass** zumindest ein Zusatzformelement (30) den zusätzlichen Formhohlraum (29) innerhalb der Fläche einer Seitenwand (4) des Transportkastens (1) begrenzt.

6. Transportkasten (1) aus Kunststoff-Spritzguss, insbesondere Flaschenkasten (2) mit durch Trennwände (11) in Aufnahmefächer (12) unterteiltem Innenraum (10), mit einem Boden (3) und Seitenwänden (4), wobei zumindest ein Wandabschnitt aus einer Grundschale (15) aus einem ersten Kunststoff und einer durch Anspritzen damit verbundenen, flächigen Hüllschicht (16) aus einem zweiten Kunststoff besteht,
**dadurch gekennzeichnet, dass** die Hüllschicht (16) zumindest bereichsweise einen Eckbereich (5) zwischen einer Seitenwand (4) und einer weiteren Seitenwand (4) der Grundschale (15) einstückig umfasst and die Hüllschicht mit einem Verfahren nach einem der Ansprüche 1 bis 3 oder einem Spritzgießwerkzeug nach Anspruch 4 oder 5 aufgebracht ist.

7. Transportkasten (1) nach Anspruch 6, **dadurch gekennzeichnet, dass** sich die Hüllschicht (16) einstückig über einen Abschnitt einer Seitenwand (4) und eine Oberkante (7) der Grundschale (15) erstreckt.

8. Transportkasten (1) nach Anspruch 6 oder 7, **dadurch gekennzeichnet, dass** sich die Hüllschicht (16) einstückig über einen Abschnitt einer Seitenwand (4) und einen Rand (6) einer Grifföffnung (8) in der Grundschale (15) erstreckt.

9. Transportkasten (1) nach einem der Ansprüche 6 bis 8, **dadurch gekennzeichnet, dass** die Grundschale (15) einen Teil einer Außenfläche (14) einer oder mehrerer Seitenwände (4) bildet.

10. Transportkasten (1) nach einem der Ansprüche 6 bis 9, **dadurch gekennzeichnet, dass** die Hüllschicht (16) in eine Ausnehmung (39) und/oder Durchdringung (40) der Grundschale (15) ragt.

11. Transportkasten (1) nach einem der Ansprüche 6 bis 10, **dadurch gekennzeichnet, dass** die Hüllschicht (16) zumindest einen gegenüber dem umgebenden Bereich einer Oberfläche der Grundschale (15) vorstehenden Vorsprung (41, 42, 43) der Grundschale (15) umschließt, flächenbündig einschließt oder vollständig überdeckt.

12. Transportkasten (1) nach einem der Ansprüche 6 bis 11, **dadurch gekennzeichnet, dass** ein Rand der Hüllschicht (16) flächenbündig an einen Absatz bzw. eine Stufe in der Oberfläche der Grundschale (15) anschließt.

13. Transportkasten (1) nach einem der Ansprüche 6 bis 12, **dadurch gekennzeichnet, dass** sich die Hüllschicht (16) einstückig über alle Seitenwände (4) erstreckt.

14. Transportkasten (1) nach einem der Ansprüche 6 bis 13, **dadurch gekennzeichnet, dass** sich die Hüllschicht (16) einstückig über die gesamte Außenseite der Grundschale (15) erstreckt.

15. Transportkasten (1) nach einem der Ansprüche 6 bis 14, **dadurch gekennzeichnet, dass** ein Abschnitt der Hüllschicht (16) mit einem an der Außenfläche (14) sichtbaren Einlegeetikett (18) verbunden ist.

16. Transportkasten (1) nach einem der Ansprüche 6 bis 15, **dadurch gekennzeichnet, dass** ein Abschnitt der Grundschale (15) mit einem an der Außenfläche (14) sichtbaren Einlegeetikett (19) verbunden ist.

17. Transportkasten (1) nach einem der Ansprüche 6 bis 16, **dadurch gekennzeichnet, dass** der erste Kunststoff und der zweite Kunststoff aus unterschiedlichen Kunststoffen gewählt sind.

18. Transportkasten (1) nach einem der Ansprüche 6 bis 17, **dadurch gekennzeichnet, dass** der zweite Kunststoff gegenüber dem ersten Kunststoff unterschiedliche mechanische Eigenschaften, insbesondere eine unterschiedliche Härte aufweist.

19. Transportkasten (1) nach einem der Ansprüche 6 bis 18, **dadurch gekennzeichnet, dass** der zweite Kunststoff gegenüber dem ersten Kunststoff eine unterschiedliche Farbe aufweist.

## Claims

1. Method of producing a transport case (1) of plastic, whereby a liquid, first plastic is injected into a first mould cavity (22) bounded by an injection mould (20) comprising at least two mould elements (21, 26) in a first injection moulding operation, the hardened plastic forms a main shell (15) constituting a base (3) and side walls (4) of the transport case (1), after which at least one displaceable mould element (26) and a displaceable additional mould element (30) in the same injection mould (20) are displaced to form an additional, second mould cavity (29) which is bounded by the main shell (15) and by the displaceable mould element (26) in the displaced position as well as by the displaceable additional mould element (30) in the displaced position, and a liquid, second plastic is injected into the additional mould cavity (29) in a second injection moulding operation which forms a casing layer (16) injected onto and adjoining the main shell (15), and the transport case (1) is then removed from the injection mould (20), **characterised in that**, at a corner region (5) between mutually adjoining side walls (4), the additional mould cavity (29) for the casing layer (16) is formed by displacing the displaceable mould elements (26, 26) on two adjacent side walls (4, 4) and closing a gap created between the displaceable mould elements (26, 26) by means of the displaceable additional mould element (30).

2. Method as claimed in claim 1, **characterised in that** an insertable label (18) is inserted in the partially opened injection mould (20) between the first injection moulding operation and the second injection moulding operation.

3. Method as claimed in claim 1 or 2, **characterised in that**, before closing the injection mould (20) for the first injection moulding operation, an insertable label (18) is inserted in a portion of a mould element (21) which is disposed in the same position during the first and second injection moulding operation and thus forms an external face (14) of the transport case (1).

4. Injection mould (20) for producing a transport case (1) made from plastic, comprising at least two mould elements (21) which are displaceable relative to one another and bound a mould cavity (22) for injection moulding a main shell (15) constituting a base (3) and side walls (4) of the transport case (1) in a pre-injection position, and at least one mould element (26) and an additional mould element (30) for creating an additional mould cavity (29) for injecting a casing layer (16) joined to the main shell (15) are mounted so that they can be moved from the pre-injection position, **characterised in that** in order to create the additional mould cavity (29), mould elements (26, 26) at a corner region (5) between adjacent side walls (4) can be moved in the direction essentially perpendicular to the respective side wall (4) of the hardened main shell (15) and at least one additional mould element (30) involved in the second injection moulding operation can be moved into a gap created between the mould elements (26, 26) as a result of this displacement.

5. Injection mould (20) as claimed in claim 4, **characterised in that** at least one additional mould element (30) bounds the additional mould cavity (29) inside the surface of a side wall (4) of the transport case (1).

6. Transport case (1) made by a plastic injection moulding process, in particular a bottle case (2) with an interior (10) sub-divided into compartments (12) by partition walls (11), with a base (3) and side walls (4), and at least one wall portion of a main shell (15) is made from a first plastic, and a flat casing layer (16) made from a second plastic is injected onto and joined to it, **characterised in that** the casing layer (16) covers at least certain regions of a corner region (5) between one side wall (4) and another side wall (4) of the main shell (15) in a single piece, and the casing layer is applied by a method as claimed in one of claims 1 to 3 or an injection mould as claimed in claim 4 or 5.

7. Transport case (1) as claimed in claim 6, **characterised in that** the casing layer (16) extends in a single piece across a portion of a side wall (4) and a top edge (7) of the main shell (15).

8. Transport case (1) as claimed in claim 6 or 7, **characterised in that** the casing layer (16) extends in a single piece across a portion of a side wall (4) and an edge (6) of a grip orifice (8) in the main shell (15).

9. Transport case (1) as claimed in one of claims 6 to 8, **characterised in that** the main shell (15) forms part of an external face (14) of one or more side walls (4).

10. Transport case (1) as claimed in one of claims 6 to 9, **characterised in that** the casing layer (16) extends into a recess (39) and/or orifice (40) of the main shell (15).

11. Transport case (1) as claimed in one of claims 6 to 10, **characterised in that** the casing layer (16) surrounds, sits flush around or completely covers at least one projection (41, 42, 43) of the main shell (15) projecting out from the surrounding region of a surface of the main shell (15).

12. Transport case (1) as claimed in one of claims 6 to 11, **characterised in that** an edge of the casing layer (16) lies flush adjoining a shoulder or a step in the surface of the main shell (15).

13. Transport case (1) as claimed in one of claims 6 to 12, **characterised in that** the casing layer (16) extends in a single piece around all the side walls (4).

14. Transport case (1) as claimed in one of claims 6 to 13, **characterised in that** the casing layer (16) extends in a single piece around the entire external face of the main shell (15).

15. Transport case (1) as claimed in one of claims 6 to 14, **characterised in that** a portion of the casing layer (16) is joined to an insertable label (18) visible on an external face (14).

16. Transport case (1) as claimed in one of claims 6 to 15, **characterised in that** a portion of the main shell (15) is joined to an insertable label (19) visible on the external face (14).

17. Transport case (1) as claimed in one of claims 6 to 16, **characterised in that** the first plastic and the second plastic are selected from different plastics.

18. Transport case (1) as claimed in one of claims 6 to 17, **characterised in that** the second plastic has different mechanical properties from the first plastic, in particular a different hardness.

19. Transport case (1) as claimed in one of claims 6 to 18, **characterised in that** the second plastic is of a different colour from the first plastic.

## Revendications

1. Procédé de fabrication d'une caisse de transport (1) en matériau synthétique, dans lequel, au cours d'une première opération de moulage par injection, un premier matériau synthétique liquide est injecté dans un premier espace creux de moule (22) qui est délimité par un outil de moulage par injection (20) comprenant au moins deux éléments de moule (21, 26), le matériau synthétique solidifié forme un fond (3) et des parois latérales (4) de la coque de base (15) constituant la caisse de transport (1), ensuite, par déplacement d'au moins un élément de moule déplaçable (26) et d'un élément de moule additionnel déplaçable (30), il est formé dans le même outil de moulage par injection (20), un deuxième espace creux de moule additionnel (29) délimité par la coque de base (15) et l'élément de moule déplaçable (26) dans la portion déplacée et l'élément de moule additionnel déplaçable (30) dans la position déplacée, au cours d'une deuxième opération de moulage par injection, il est injecté dans l'espace creux de moule additionnel (29) un deuxième matériau synthétique liquide qui, après la solidification, forme une couche d'enveloppe (16) rapportée par projection à la coque de base (15), et ensuite la caisse de transport (1) est démoulée de l'outil de moulage par injection (20), **caractérisé en ce que**, à une zone de coin (5) entre des parois latérales avoisinantes (4), l'espace creux de moule additionnel (29) pour la couche d'enveloppe (16) est formé par un déplacement sensiblement rectangulaire relativement à la paroi latérale respective (4) de la coque de base solidifiée (15) des éléments de moule déplaçables (26, 26) à deux parois latérales avoisinantes (4, 4) et une fermeture d'un espace intermédiaire produit par le déplacement entre les éléments de moule déplaçables (26, 26), au moyen de l'élément de moule additionnel déplaçable (30).

2. Procédé selon la revendication 1, **caractérisé en ce qu'**il est placé entre la première opération de moulage par injection et la deuxième opération de moulage par injection une étiquette d'insertion (18) dans l'outil de moulage par injection (20) partiellement ouvert.

3. Procédé selon la revendication 1 ou 2, **caractérisé en ce qu'**avant la fermeture de l'outil de moulage par injection (20) pour la première opération de moulage par injection, une étiquette d'insertion (18) est placée dans une section de l'élément de moule (21) qui se trouve au cours des première et deuxième opérations de moulage par injection dans la même position et forme ainsi une face extérieure (14) de la caisse de transport (1).

4. Outil de moulage par injection (20) pour la fabrication d'une caisse de transport (1) en matériau synthétique comprenant au moins deux éléments de moule (21) déplaçables l'un relativement à l'autre qui, dans une position avant l'injection, délimitent un espace creux de moule (22) pour le moulage par injection d'une coque de base (15) formant un fond (3) et des parois latérales (4) de la caisse de transport (1), où au moins un élément de moule (26) et un élément de moule additionnel (30), pour la création d'un espace creux de moule additionnel (29), pour l'application par projection d'une couche d'enveloppe (16) reliée à la coque de base (15) sont logés d'une manière déplaçable par rapport à la position avant l'injection, **caractérisé en ce que** pour la création de l'espace creux de moule additionnel (29) à une zone de coin (5) entre des parois latérales avoisinantes (4), des éléments de moule (26, 26) sont déplaçables sensiblement dans la direction rectangulaire relativement à la paroi latérale respective (4) de la coque de base solidifiée (15), et dans un espace intermédiaire entre les éléments de moule (26, 26) produit par ce mouvement de déplacement, au moins un élément de moule additionnel (30) participant à la deuxième opération de moulage par injection est déplaçable.

5. Outil de moulage par injection (20) selon la revendication 4, **caractérisé en ce qu'**au moins un élément de moule additionnel (30) délimite l'espace creux de moule additionnel (29) à l'intérieur de la face d'une paroi latérale (4) de la caisse de transport (1).

6. Caisse de transport (1) en matériau synthétique moulée par injection, en particulier caisse pour bouteilles (2) avec un espace intérieur (10) séparé par des parois de séparation (11) en des cases (12), avec un fond (3) et des parois latérales (4), où au moins une section de paroi est constituée d'une coque de base (15) en un premier matériau synthétique et d'une couche d'enveloppe plane (16), reliée par projection à celle-ci en un deuxième matériau synthétique, **caractérisée en ce que** la couche d'enveloppe (16) entoure en une pièce au moins par zones une zone de coin (5) entre une paroi latérale (4) et une autre paroi latérale (4) de la coque de base (15) et que la couche d'enveloppe est appliquée suivant un procédé selon l'une des revendications 1 à 3 ou un outil de moulage par injection selon la revendication 4 ou 5.

7. Caisse de transport (1) selon la revendication 6, **caractérisée ce que** la couche d'enveloppe (16) s'étend en une pièce sur une section d'une paroi latérale (4) et une arête supérieure (7) de la coque de base (15).

8. Caisse de transport (1) selon la revendication 6 ou 7, **caractérisée en ce que** la couche d'enveloppe (16) s'étend en une pièce sur une section d'une paroi latérale (4) et un bord (6) d'une ouverture de préhension (8) dans la coque de base (15).

9. Caisse de transport (1) selon l'une des revendications 6 à 8, **caractérisée en ce que** la coque de base (15) forme une partie d'une face extérieure (14) d'une ou de plusieurs parois latérales (4).

10. Caisse de transport (1) selon l'une des revendications 6 à 9, **caractérisée en ce que** la couche d'enveloppe (16) fait saillie dans un évidement (39) et/ou un perçage traversant (40) de la coque de base (15).

11. Caisse de transport (1) selon l'une des revendications 6 à 10, **caractérisée en ce que** la couche d'enveloppe (16) renferme au moins une saillie (41, 42, 43) de la coque de base (15) faisant saillie par rapport à la zone environnante d'une surface de la coque de base (15), la renferme en affleurement de surface ou la recouvre complètement.

12. Caisse de transport (1) selon l'une des revendications 6 à 11, **caractérisée en ce qu'**un bord de la couche d'enveloppe (16) fait suite en affleurement de surface à un gradin respectivement un pas dans la surface de la coque de base (15).

13. Caisse de transport (1) selon l'une des revendications 6 à 12, **caractérisée en ce que** la couche d'enveloppe (16) s'étend en une pièce sur toutes les parois latérales (4).

14. Caisse de transport (1) selon l'une des revendications 6 à 13, **caractérisée en ce que** la couche d'enveloppe (16) s'étend en une pièce sur tout le côté extérieur de la coque de base (15).

15. Caisse de transport (1) selon l'une des revendications 6 à 14, **caractérisée en ce qu'**une section de la couche d'enveloppe (16) est reliée à une étiquette d'insertion (18) visible à la face extérieure (14).

16. Caisse de transport (1) selon l'une des revendications 6 à 15, **caractérisée en ce qu'**une section de la coque de base (15) est reliée à une étiquette d'insertion (19) visible à la face extérieure (14).

17. Caisse de transport (1) selon l'une des revendications 6 à 16, **caractérisée en ce que** le premier matériau synthétique et le deuxième matériau synthétique sont sélectionnés dans des matériaux synthétiques différents.

18. Caisse de transport (1) selon l'une des revendications 6 à 17, **caractérisée en ce que** le deuxième matériau synthétique présente par rapport au premier matériau synthétique des propriétés mécaniques différentes, en particulier une dureté différente.

19. Caisse de transport (1) selon l'une des revendications 6 à 18, **caractérisée en ce que** le deuxième matériau synthétique présente par rapport au premier matériau synthétique une couleur différente.
